Europäisches Patentamt

European Patent Office

Office européen des brevets

(1) Veröffentlichungsnummer: **0 275 889**

**A2**

## (12) EUROPÄISCHE PATENTANMELDUNG

(21) Anmeldenummer: 88100234.9

(51) Int. Cl.⁴: **B32B 15/08** , B32B 27/32

(22) Anmeldetag: **11.01.88**

(30) Priorität: **17.01.87 DE 3701307**

(43) Veröffentlichungstag der Anmeldung:
**27.07.88 Patentblatt 88/30**

(84) Benannte Vertragsstaaten:
**AT BE CH DE ES FR GB GR IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Bothe, Lothar, Dr. Dipl.-Chem.**
**Am Heiligenhaus 9**
**D-6500 Mainz(DE)**
Erfinder: **Crass, Günther, Dipl.-Chem.**
**Bachstrasse 7**
**D-6204 Taunusstein-Wehen(DE)**
Erfinder: **Janocha, Siegfried, Dr. Dipl.-Chem.**
**Weinfeldstrasse 28**
**D-6200 Wiesbaden(DE)**
Erfinder: **Schlögl, Gunter, Dr. Dipl.-Phys.**
**Finkenweg 2**
**D-6233 Kelkheim(DE)**

(54) **Mehrschichtfolie mit einem biaxial gestreckten Polypropylenfilm.**

(57) Metallisierte Mehrschichtfolien mit einem biaxial gestreckten Polypropylenfilm als Basisschicht sollen für Verpackungszwecke, hohe Kratzfestigkeit, gute Siegeleigenschaften, wie niedrige Siegeltemperatur, ansprechende optische Eigenschaften, wie hohen Metallglanz, ausgezeichnete Metallisierbarkeit der Basisschicht bzw. einer Deckschicht sowie gute Verarbeitungseigenschaften beim Metallisieren, Bedrucken, Schneiden und bei der Verarbeitung auf schnellaufenden Verpackungsmaschinen aufweisen. Dieses Anforderungsprofil wird durch eine asymmetrisch aufgebaute Mehrschichtfolie mit einer biaxial gestreckten Basisschicht 4 aus Polypropylen, einer Siegelschicht 3, die eine Additivkombination aus plättchenförmigem Pigment und Siloxan enthält und gegebenenfalls durch einen Zusatz von Polypropylen und einem Kohlenwasserstoffharz modifiziert ist, und aus einer koronabehandelten, nicht-siegelfähigen Polypropylen-Deckschicht 2 erfüllt. Anstelle der Deckschicht 2 aus nicht-siegelfähigem Polypropylen kann auch eine koronabehandelte, siegelfähige Kopolymerschicht als Deckschicht 2 eingesetzt werden. Die Deckschicht 2 kann auch entfallen; es wird dann die eine Oberfläche der Basisschicht 4 metallisiert. Aus diesen Mehrschichtfolien werden Schlauchtüten, Hüllen, Behälter verschiedener Formgebung zur Verpackung von Lebensmitteln, einschließlich der Vakuumverpackung von Lebensmitteln, hergestellt.

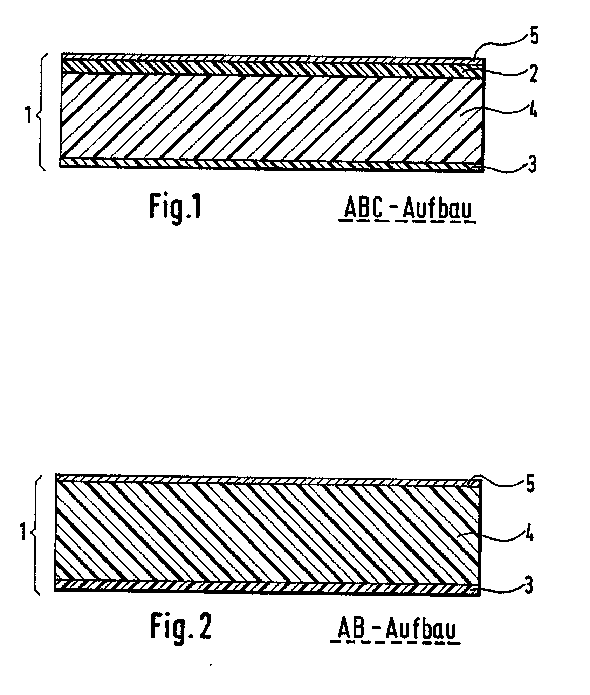

Fig.1          ABC-Aufbau

## Mehrschichtfolie mit einem biaxial gestreckten Polypropylenfilm

Die Erfindung betrifft eine Mehrschichtfolie mit einem biaxial gestreckten Polypropylenfilm als Basisschicht, die an einer Oberfläche eine durch Metallisieren aufgebrachte Metallschicht trägt.

Aus der DE-PS 27 56 497 ist eine Verbundfolie für Verpackungszwecke mit zwei Polyolefinfilmen und einer dazwischen liegenden Metallschicht bekannt, wobei mindestens einer der beiden Polyolefinfilme durch Verstrekken orientiert ist und aus isotaktischem Polypropylen besteht. Die Metallschicht wird durch Metallisieren eines der beiden Filme gebildet und weist einen spezifischen Widerstand von 1 bis 5 Ω auf. Der andere der beiden Filme besteht aus Polyethylen, Polypropylen, einem kristallinen Ethylen/Propylen-Mischpolymerisat oder aus deren Mischungen und ist gleichfalls verstreckt. Mindestens einer der beiden Filme ist mit einer Siegelschicht überzogen. Mit dieser Verbundfolie soll erreicht werden, daß auch bei Falt- und Knitterbeanspruchung gleichbleibend gute Sperreigenschaften erhalten werden.

In der EP-B1 - 0 021 672 ist ein Verfahren zur Herstellung eines metallbeschichteten orientierten Polypropylenfilms beschrieben, bei dem ein Filmsubstrat mit einer Polypropylenkernschicht und einer Ethylen/Propylen-Kopolymer-Außenschicht auf wenigstens einer Sei te der Kernschicht koextrudiert wird, wobei weder die Kernschicht noch die Außenschicht ein Gleitmittel enthält. Es folgt eine biaxiale Orientierung bzw. Verstreckung des Films, eine Koronaentladungsbehandlung wenigstens der Außenschicht des Films und die Metallisierung der koronabehandelten Außenschicht. Die Außenschicht enthält 2 bis 4 Gew.% Ethylen und 96 bis 98 Gew.% Propylen. Die Metallschicht besteht aus Aluminium, Kupfer, Silber oder Chrom. Das Weglassen des Gleitmittels verstärkt die Adhäsion zwischen der Kernschicht bzw. der Außenschicht mit der Metallschicht, welche in einem bestimmten Bereich Sperrwirkungen gegen Sauerstoff, Wasserdampf, Kohlendioxid entfaltet.

Aus der Druckschrift EP-A1 - 0 038 022 ist eine Verbundfolie aus zwei Schichten und einer dazwischen liegenden Klebeschicht bekannt, von denen eine der Schichten aus einem Polyolefinfilm und die andere Schicht aus Papier oder einem Karton besteht. Der Polyolefinfilm ist zumindest auf einer Seite metallisiert, wobei die Metallschicht einen Widerstand im Bereich von 1 bis 5 Ω aufweist. Der Polyolefinfilm ist durch Verstrecken orientiert und besteht aus isotaktischem Polypropylen, Polyethylen, Propylen/Ethylen-Kopolymeren oder aus Mischungen dieser Materialien, während für die Metallschicht Aluminium verwendet wird. Mindestens eine der beiden Seiten der Verbundfolie weist eine Siegelschicht auf.

In der Druckschrift EP-B1 0 069 642 ist eine Verbund folie aus zwei Schichten eines auf einer Seite metallisierten thermoplastischen Polymeren beschrieben, die miteinander durch eine Klebstoffschicht verbunden sind. Eine der beiden Schichten des thermoplastischen Polymeren besteht aus Polyterephthalat des Ethylenglykols. Die beiden Schichten des metallisierten thermoplastischen Polymeren können über ihre metallisierten Flächen miteinander verbunden sein. Ebenso ist es möglich, die beiden Schichten des metallisierten thermoplastischen Polymeren über die metallisierte Fläche und die thermoplastische Fläche miteinander zu verbinden. Zum Metallisieren wird Aluminium verwendet. Das thermoplastische Polymer der zweiten Schicht ist beispielsweise aus der Gruppe, bestehend aus dem Polyterephthalat des Ethylenglykols und Polypropylenen ausgewählt. Eine zusätzliche Außenschicht aus einem thermoplastischen Polymer kann auf der Metallschicht aufgebracht sein. Als Klebemittel zwischen den beiden Metallschichten kann ein Polyurethan verwendet werden.

Die bekannten Verbundfolien lösen das eine oder das andere Problem, wie beispielsweise, die Metallisierbarkeit der Verbundfolie zu erhöhen, gute Siegeleigenschaften, insbesondere eine niedrige Siegeltemperatur, zu besitzen, oder die Verarbeitungseigenschaften nach dem Metallisieren, wie beispielsweise das Bedrucken, Schneiden und das Verarbeiten in einer Verpackungsmaschine, zu verbessern.

Aufgabe der vorliegenden Erfindung ist es, bei einer Polypropylenfolie als Basisschicht für eine Verbundfolie die Metallisierbarkeit zu verbessern, die Kratzempfindlichkeit zu verringern, ein gutes optisches Erscheinungsbild der Folie infolge hohen Glanzes der Metallschicht zu schaffen, gute Siegeleigenschaften, insbesondere eine niedrige Siegeltemperatur, zu gewährleisten und die Verarbeitungseigenschaften nach dem Metallisieren, wie das Bedrucken, das Schneiden, und die Weiterverarbeitung in einer Verpackungsmaschine zu verbessern.

Diese Aufgabe wird durch eine Mehrschichtfolie gemäß den Merkmalen des Oberbegriffs des Anspruchs 1 dadurch gelöst, daß die Folie unsymmetrisch aus voneinander unterschiedlichen Schichten aufgebaut ist, daß die der Metallschicht zugewandte Oberfläche frei von organischen Additiven, wie Gleitmitteln und Antistatika, ist und vor der Metallisierung einer Koronaentladung ausgesetzt ist, und daß auf die nicht metallisierte, siegelbare Oberfläche der Basisschicht eine Siegelschicht als Deckschicht mit einer Additiv-Kombination aus einem anorganischen Pigment und Polydiorganosiloxan aufgebracht ist.

Die weitere vorteilhafte Ausgestaltung der Erfindung ergibt sich aus den Merkmalen der Unteransprüche.

Die Folie nach der Erfindung erfüllt die in der Aufgabenstellung aufgezählten Maximalforderungen des Anforderungsprofils in vorbildlicher Weise.

Durch den asymmetrischen Aufbau mit einer koronabehandelten, nicht modifizierten glatten Polypropylenoberfläche wird beim Metallisieren eine Metallschicht mit hohem Glanz erhalten. Die niedrige Siegeltemperatur von 100 °C oder darunter wird durch die spezielle Polyolefinharz-Zusammensetzung erreicht, wobei der Zusatz von Polypropylen und/oder Kohlenwasserstoffharz zur Erhöhung der Kratzfestigkeit führt. Durch die einseitige Pigmentierung in Verbindung mit der Siloxanmodifizierung werden eine gute Verarbeitbarkeit beim Schneiden, Metallisieren und gegebenenfalls Bedrucken und eine ausgezeichnete Verarbeitbarkeit auf schnellaufenden Verpackungsmaschinen erreicht.

Aus der Mehrschichtfolie werden Tüten, Schlauchverpackungen, Hüllen, Behälter unterschiedlicher Formen und sonstige Behältnisse geformt, die insbesondere zur Lebensmittelverpackung, einschließlich der Vakuumverpackung von Lebensmitteln, eingesetzt werden. Sie eignet sich auch zur Herstellung von Geschenkpapier.

Anhand der Zeichnungen wird der Aufbau einer Mehrschichtfolie nach der Erfindung kurz erläutert. Es zeigen:

Figur 1 einen sogenannten ABC-Aufbau einer Mehrschichtfolie im Schnitt und

Figur 2 einen sogenannten AB-Aufbau der Mehrschichtfolie nach der Erfindung.

Eine Mehrschichtfolie 1 nach Figur 1 besteht aus einer nicht siegelfähigen Deckschicht 2, einem biaxial gestreckten Polypropylenfilm als Basisschicht 4 und einer Siegelschicht 3. Auf der Deckschicht 2 befindet sich eine Metallschicht 5. Die Schichten 2, 3 und 4 unterscheiden sich voneinander in ihrer Zusammensetzung und in ihrer Vorbehandlung. Aus diesen Gründen wird der Aufbau der Mehrschichtfolie als unsymmetrischer ABC-Aufbau bezeichnet. Die Metallschicht 5 wird durch Metallisieren der Oberfläche der Deckschicht 2 hergestellt, wobei diese Oberfläche nicht pigmentiert und frei von organischen Additiven, wie Gleitmitteln und Antistatika, ist. Die Metallisierung erfolgt bevorzugt mit Aluminium. Der spezifische Oberflächenwiderstand der Metallschicht beträgt dabei insbesondere 1 bis 5 Ω. Zur Verbesserung der Haftfähigkeit der Metallschicht auf der Basisschicht wird diese vor der Metallisierung einer Koronaentladung ausgesetzt. Die auf der entgegengesetzten, nicht metallisierten Oberfläche der Basisschicht 4 aufgebrachte Siegelschicht 3 enthält eine Additivkombination aus einem anorganischen Pigment und Siloxan. Dabei kann die Siegelschicht 3 aus $C_2$-, $C_2C_3$-, $C_2C_4$-, $C_3C_4$-, $C_2C_3C_4$-Rohstoffen oder Mischungen dieser Rohstoffe bestehen. Das anorganische Pigment in der Siegelschicht ist beispielsweise plättchenförmiges Aluminiumsilikat, während das Siloxan in der Siegelschicht Polydialkylsiloxan sein kann. Zusätzlich kann die Siegelschicht 3 noch mit einem Polypropylen-Homopolymeren und/oder einem Kohlenwasserstoffharz modifiziert sein. Die Siegeltemperatur der Siegelschicht ist kleiner/gleich 100 °C und somit niedriger als die Siegeltemperatur vergleichbarer Siegelschichten.

Die Siegelschicht ist beispielsweise aus einem Olefinharz, bestehend aus einem Ethylen/Propylen/Butylen-Terpolymeren und einem Propylen/Butylen-Kopolymeren mit einem Gehalt von 0,1 bis 7 Gew.% Ethylen, 53 bis 89,9 Gew.% Propylen und 10 bis 40 Gew.% Butylen zusammengesetzt.

Das Siloxan ist beispielsweise ein Dimethylpolysiloxan mit einer Viskosität von 1000 bis 50.000 $mm^2/s$ bei 25 °C in einer Konzentration von 0,2 bis 0,8 Gew.%.

Die nicht-siegelfähige Deckschicht 2 besteht aus koronabehandeltem Polypropylen und enthält 0,1 bis 0,7 Gew.% eines anorganischen Pigments. Wahlweise kann auch anstelle der nicht siegelfähigen Deckschicht 2 aus Polypropylen auch eine koronabehandelte, siegelfähige Deckschicht aus einem Kopolymeren verwendet werden.

Die gesamte Dicke der Mehrschichtfolie beträgt zwischen 10 und 35 μm, insbesondere liegt die Dicke zwischen 15 und 30 μm. Die Dicken der beiden Deckschichten 3 und 2 betragen jeweils 0,1 bis 1,5 μm, insbesondere 0,3 bis 1,0 μm.

In Figur 2 ist eine Mehrschichtfolie gezeigt, die aus der Basisschicht 4 und der Siegelschicht 3 besteht, wobei diese beiden Schichten die gleiche Zusammensetzung be sitzen, wie sie anhand von Figur 1 beschrieben wurden, so daß sich eine Wiederholung der Beschreibung erübrigt. Die Basisschicht 4 trägt eine Metallschicht 5, beispielsweise aus Aluminium. Die nicht-metallisierte Oberfläche der Siegelschicht 3 kann einer Koronaentladung ausgesetzt werden, um die Verarbeitbarkeit der Mehrschichtfolie beim Bedrucken zu erhöhen.

Im folgenden wird die Erfindung anhand von Ausführungsbeispielen näher erläutert.

## Ausführungsbeispiel 1

Die Schichtdicken des in Fig. 1 gezeigten ABC-Aufbaus betragen für die einzelnen Schichten:

Schicht C = 1 $\mu$m
Schicht B = 23 $\mu$m
Schicht A = 1 $\mu$m,

woraus sich eine Gesamtdicke von 25 $\mu$m bei Vernachlässigung der Dicke der Metallschicht in Fig. 1 ergibt. Die Schicht A ist in Fig. 1 mit der Bezugsnummer 3, die Schicht B mit der Bezugsnummer 4 und die Schicht C mit der Bezugsnummer 2 belegt.

Schicht C -Rohstoff der Schicht C ist ein statistisches $C_2C_3$-Copolymerisat mit 4,5 Gew.% Ethylen und einem Schmelzindex von 7 g/10 min.
Die zu metallisierende Seite der Schicht C wird mit einer Oberflächenspannung von 39 mN/m koronabehandelt.

Schicht B -ist ein 100 % PP-Homopolymerisat mit einem Schmelzindex von 3 g/10 min bei 230 °C und 21,19 N (2,16 kp) Belastung.

Schicht A -besteht aus einem Siegelrohstoff mit 50 Gew.% $C_2C_3C_4$-Terpolymerisat mit 1,4 Gew.% $C_2$, 2,8 Gew.% $C_4$ und 95,8 Gew.% $C_3$ sowie 50 Gew.% $C_3C_4$-Copolymeren mit 66,8 Gew.% $C_3$ und 33,2 Gew.% $C_4$. Der Siegelrohstoff enthält 0,4 % Aluminiumsilikat mit einer mittleren Korngröße von 0,55 $\mu$m, 0,5 % Polydimethylsiloxan mit einer Viskosität von 30.000 mm$^2$/sec und 8 % hydriertes Cyclopentadienharz mit einer Erweichungstemperatur von 125 °C. Der Schmelzindex beträgt 8 g/10 min.

Die Mehrschichtfolie wird in üblicher Koextrusionstechnik hergestellt unter Anwendung einer Zweistufenstreckung und einer Schmelzetemperatur von 260 °C. Die Längsstreckung erfolgt bei 130 °C und einem Streckverhältnis $\lambda_L$ = 5,0, die Querstreckung bei 165 °C und einem Streckverhältnis $\lambda_Q$ = 10.

## Ausführungsbeispiel 2

Die Mehrschichtfolie hat den in Fig. 2 gezeigten AB-Aufbau, der demjenigen des Ausführungsbeispiels 1, unter Weglassung der Schicht C, entspricht. Die zu metallisierende Seite der Schicht B wird mit einer Oberflächenspannung von 39 mN/m koronabehandelt.

## Ausführungsbeispiel 3

Die Mehrschichtfolie ist wie diejenige des Ausführungsbeispiels 1 aufgebaut, mit dem Unterschied, daß die Schicht C aus einem PP-Homopolymerisat mit einem Schmelzindex von 4 g/10 min bei 230 °C und 21,19 N (2,16 kp) Belastung besteht.

Bei jedem Ausführungsbeispiel wird die zu metallisierende Oberfläche der Schicht B bzw. C als erstes einer Koronaentladung ausgesetzt und anschließend unter Vakuum metallisiert, wobei Aluminium bevorzugt verwendet wird. Die Metallschichtdicke wird so gewählt, daß sich ein Oberflächenwiderstand von 3,5 Ohm ergibt. Im folgenden sind einige Kennzeichnungsgrößen von nicht metallisierten und metallisierten Folien der Ausführungsbeispiele 1, 2 und 3 zusammengestellt.

## Nicht-metallisierte Folien

| Ausführungsbeispiel | | 1 | 2 | 3 |
|---|---|---|---|---|
| Dicke (µm) | | 25 | 25 | 25 |
| Glanz | coronabehandelte Oberfläche | 115 | 125 | 130 |
| | nicht-coronabehandelte Oberfläche | 95 | 95 | 95 |
| Trübung 4-lagig (%) | | 22 | 14 | 16 |
| Kratzfestigkeit(%) nicht-coronabehandelt | | 18 | 18 | 18 |
| Siegelfestigkeit N/15 mm | coronabehandelt | 2,5 | 0 | 0 |
| | nicht-coronabehandelt | 2,5 | 2,5 | 2,5 |

## Metallisierte Folien

| Ausführungsbeispiel | 1 + 2 + 3 |
|---|---|
| Sauerstoffdurchlässigkeit | $35 \ cm^3/m^2 \cdot 24 \ h \cdot kg/cm^2$ |
| Wasserdampfdurchlässigkeit | $1 \ g/m^2 \cdot 24 \ h$ |
| Metallhaftung | sehr gut, Metall läßt sich beim Haftstreifentest nicht abziehen |

Die Bestimmung der Kennzeichnungsgrößen Glanz, Trübung, Kratz-und Siegelfestigkeit wird nachstehend kurz erläutert.

Die Bestimmung des Glanzes erfolgte nach DIN 67 530 unter Verwendung eines Reflektometers RB der Firma Dr. Lange (Bundesrepublik Deutschland).

Die Bestimmung der Trübung erfolgte nach ASTM-D 1003-52, wobei anstelle einer 4-Grad-Lochblende eine 1-Grad-Spaltblende eingesetzt und die Trübung bei vier übereinanderliegenden Folienlagen gemessen wurde (die 4 Lagen wurden gewählt, weil man dadurch im optimalen Meßbereich liegt).

Unter der Kratzfestigkeit einer Folie versteht man die Beständigkeit der Folienoberfläche gegen Veränderungen infolge mechanischer Beanspruchung, insbesondere bei Reibungsbeanspruchung die Entstehung linienförmiger Zerstörungen (Kratzer).

Als Maß für die Kratzfestigkeit einer Folie wird in der Regel der Trübungsanstieg $\Delta T$, der durch die Verkratzung verursacht wird, verwendet:

$$\Delta T = T_v - T_o.$$

Unter $T_v$ ist hierbei die Trübung der verkratzten Folie, unter $T_o$ die Trübung der nicht veränderten Originalfolie zu verstehen, wobei im Rahmen der Kratzfestigkeitsmessung die Trübung jeweils an einer Folienlage bestimmt wird.

Die Messung der Kratzfestigkeit gegen Reibungsbeanspruchung erfolgt nach DIN 53 754. Die Messungen wurden mit einem Abriebmeßgerät des Typs 1161 der Firma Frank (BRD) durchgeführt, wobei Reibräder der Marke CALIBRASE® CS-10 F der Firma Teledyne (USA) eingesetzt wurden, die mit 250 g belastet waren.

Zur Bestimmung der Siegelfestigkeit werden zwei 15 mm breite Streifen übereinandergelegt und bei 100 °C, einer Siegelzeit von 0,5 s und einem Siegeldruck von 3 bar versiegelt. Die Siegelfestigkeit wird nach der T-Peel-Methode bestimmt.

Die Sauerstoff-und Wasserdampfdurchlässigkeit werden nach ASTM D-1434 bzw. ASTM E-96 gemessen.

**Ansprüche**

1. Mehrschichtfolie mit einem biaxial gestreckten Polypropylenfilm als Basisschicht, die an einer Oberfläche eine durch Metallisieren aufgebrachte Metallschicht trägt, dadurch gekennzeichnet, daß die Folie (1) unsymmetrisch aus voneinander unterschiedlichen Schichten (3,4 bzw. 3,4,2) aufgebaut ist, daß die der Metallschicht (5) zugewandte Oberfläche frei von organischen Additiven, wie Gleitmitteln und Antistatika, ist und vor der Metallisierung einer Koronaentladung ausgesetzt ist, und daß auf die nicht metallisierte, siegelbare Oberfläche der Basisschicht (4) eine Siegelschicht (3) als Deckschicht mit einer Additivkombination aus einem anorganischen Pigment und Polydiorganosiloxan aufgebracht ist.

2. Mehrschichtfolie nach Anspruch 1, dadurch gekennzeichnet, daß die Siegelschicht (3) aus C$_2$-, C$_2$C$_3$-, C$_2$C$_4$-, C$_3$C$_4$-, C$_2$C$_3$C$_4$-Rohstoffen oder Mischungen dieser Rohstoffe besteht und daß das anorganische Pigment in der Siegelschicht plättchenförmiges Aluminiumsilikat ist.

3. Mehrschichtfolie nach Anspruch 1, dadurch gekennzeichnet, daß das Siloxan in der Siegelschicht (3) Polydialkylsiloxan ist.

4. Mehrschichtfolie nach Anspruch 1, dadurch gekennzeichnet, daß die Siegelschicht (3), die die Additivkombination aus dem anorganischen Pigment und Siloxan enthält, mit einem Polypropylenhomopolymeren und/oder einem Kohlenwasserstoffharz modifiziert ist.

5. Mehrschichtfolie nach Anspruch 1, dadurch gekennzeichnet, daß sich die Siegelschicht aus einem Olefinharz, bestehend aus einem Ethylen-Propylen-Butylen-Terpolymeren und einem Propylen-Butylen-Kopolymeren mit einem Gehalt von 0,1 bis 7 Gew.% Ethylen, 53 bis 89 Gew.% Propylen und 10 bis 40 Gew.% Butylen, zusammensetzt.

6. Mehrschichtfolie nach einem der Ansprüche 1 bis 4, dadurch gekennzeichnet, daß die Siegeltemperatur der Siegelschicht (3) kleiner/gleich 100 °C ist.

7. Mehrschichtfolie nach Anspruch 1, dadurch gekennzeichnet, daß das Siloxan ein Dimethylpolysiloxan mit einer Viskosität von 1.000 bis 50.000 mm$^2$/s bei 25 °C in der Konzentration von 0,2 bis 0,8 Gew.% ist.

8. Mehrschichtfolie nach Anspruch 1, dadurch gekennzeichnet, daß die Menge an anorganischem Pigment in einer weiteren, nicht siegelfähigen Deckschicht (2), die aus koronabehandeltem Polypropylen besteht und auf der die Metallschicht (5) aufgebracht ist, 0,1 bis 0,7 Gew.% beträgt.

9. Mehrschichtfolie nach den Ansprüchen 1 bis 8, dadurch gekennzeichnet, daß ihre Foliendicke 10 bis 35 µm, insbesondere 15 bis 30 µm; beträgt.

10. Mehrschichtfolie nach Anspruch 1, dadurch gekennzeichnet, daß die Dicken der beiden Deckschichten (2,3) jeweils 0,1 bis 1,5 µm, insbesondere 0,3 bis 1,0 µm, betragen.

11. Mehrschichtfolie nach den Ansprüchen 1 bis 10, dadurch gekennzeichnet, daß die Metallschicht aus Aluminium besteht und daß der spezifische Oberflächenwiderstand der Metallschicht 1 bis 5 Ω beträgt.

12. Verwendung der Mehrschichtfolie nach den Ansprüchen 1 bis 8 als Bestandteil eines Mehrschichtlaminats.

Fig.1      ABC - Aufbau

Fig. 2      AB - Aufbau